# EUROPEAN PATENT APPLICATION

(11) **EP 2 439 681 A1**
(43) Date of publication of application: **11.04.2012**
(21) Application number: 09845540.5
(22) Date of filing: 05.06.2009
(51) Int. Cl.: G06M 7/02

(54) **INDIVIDUAL COUNTER USING FLUID**

(71) Applicant: Osaka N.E.D. Machinery Corporation, Osaka 550-0012 (JP)
(72) Inventor: YAMASAKI Hiroshi, Osaka-shi Osaka 550-0012 (JP); MINAMI Tsutomu, Osaka-shi Osaka 550-0012 (JP); SANTOU Akihiro, Osaka-shi Osaka 550-0012 (JP); IRIE Hiroyuki, Osaka-shi Osaka 550-0012 (JP); MARUMOTO Nobuko, Osaka-shi Osaka 550-0012 (JP)
(74) Representative: Blodig, Wolfgang
(86) International application number: PCT/JP2009/060375
(87) International publication number: WO 2010/140257

(57) **Abstract**

There is provided an individual-organism counting device being capable of determining the number of even fine individual organism, such as shrimp larvae, with high accuracy and also having a simple structure and a reduced size, while being less prone to debilitate and extinguish the individual organism. In order to realize this, inclined flow channels 10A and 10B inclined in opposite directions are placed in two stages which are upper and lower stages, and sea water in a tank 21 is circulated through the inclined flow channels 10A and 10B. An aggregation of individual organism 60 to be counted is introduced into an upstream portion of the upper-stage inclined flow channel 10A. The introduced individual organism 60 are dispersed while they proceed from the upper-stage inclined flow channel 10A to the lower-stage inclined flow channel 10B, and, further, they are counted by photographing with a camera 40 and by analyses of images captured by an image analysis portion 50, in a measurement portion 18B provided halfway through the inclined flow channel 10B. There are provided stem-shaped liquid reservoirs 14A and 14B having bottom surfaces which are inclined upwardly toward their downstream sides with inclination angles gradually increasing with increasing distance from the opposite sides to the center, downstream from an individual-organism introducing portion 12A in the inclined flow channel 10A and upstream from the measurement portion 18B in the inclined flow channel 10B to promote the dispersion of the individual organism 60.

## Description

### TECHNICAL FIELD

The present invention relates to an individual-organism counting device capable of counting small aquatic resources (hereinafter, referred to as alevins) such as shrimp larvae, little fishes and alevins while keeping them alive and, more particularly, relates to an individual-organism counting device capable of counting alevins with high accuracy while preventing them from being debilitated by utilizing flows of a liquid such as sea water or real water.

### BACKGROUND ART

Conventionally, there has been a need for accurately counting numbers of individual organism in short periods of time in commercial transactions for cultured alevins and, therefore, various types of automated counting devices have been developed. There have been known two types of devices as follows, as devices suitable for counting small individual organism, such as alevins.

One type of them are devices which separate individual organism from water, dispersedly introduce them onto a conveyer and determines the number of individual organism during the process for discharging them from the conveyer (Patent Document 1 and Patent Document 2). The other type of them are devices which house individual organism together with water in a box, provide a plurality of small outlet ports which enable passing individual organism one by one therethrough in the bottom plate and the side walls of the box, and determine the number of individual organism being flowed out through the plurality of outlet ports together with water (Patent Document 3 and Patent Document 4).

However, the first automated device draws up individual organism from water and, therefore, in cases of small alevins, significantly debilitates them and may extinguish them during the counting process, which induces the problem of degradation of the yield. Further, due to their small sizes, the individual organism tend to adhere to the conveyer, and not a small number of individual organism can not drop from the conveyer. This also induces the problem of degradation of the yield and, further, induces the problem of degradation of the counting system.

The second automated device determines the number of individual organism in flowing water and, therefore, is less prone to debilitate or extinguish the individual organism. Further, the second automated device counts a large number of individual organism by dispersing them one by one using the plurality of small outlet ports, which prevents the occurrence from count errors due to overlap of individual organism, thereby providing higher counting accuracy. On the other hand, it is necessary to provide a camera at each of the plurality of outlet ports, thereby inducing the problem of an increase of the equipment cost.

These problems become prominent, particularly in cases of shrimp larvae with lengths in the range of 2 to 5 mm. For information, little fishes and alevins have lengths in the range of 5 to 10 mm. Further, there is generally a tendency that the smaller the lengths of individual organism, the larger the number of individual organism to be counted at once, which is a factor making the problems bigger.

### PRIOR ARTS

### Patent Documents

Patent Document 1: JP-A No. 8-30757
Patent Document 2: JP-A No. 8-329212
Patent Document 3: JP-A No. 7-36643
Patent Document 4: JP-A No. 6-245665

### DISCLOSURE OF THE INVENTION

### PROBLEMS TO BE SOLVED BY THE INVENTION

It is an object of the present invention to provide an economical individual-organism counting device being capable of determining the number of individual organism with high accuracy and having a simple structure and a reduced size while being less prone to debilitate and extinguish the individual organism, even when counting, at once, a large number of fine individual organism, such as shrimp larvae.

### MEANS FOR SOLVING THE PROBLEMS

In order to attain the aforementioned object, the present inventors focused attention to the individual-organism counting devices which utilize flowing water which are described in the Patent Documents 3 and 4. In cases of such individual-organism counting devices which utilize flowing water, individual organism are counted while being kept immersed in water, which prevents the individual organism from being debilitated or extinguished. However, in cases of such individual-organism counting devices which utilize flowing water, techniques for dispersing an aggregation of individual organism introduced to the flowing water are important. The individual-organism counting devices which utilize flowing water, which are described in Patent Documents 3 and 4, are adapted to count a large number of individual organism by dispersing them one by one using the plurality of small outlet ports, which requires many cameras and the like, thereby inducing the problem of expensiveness of the device, as described above.

Therefore, the present inventors have contrived to utilize flowing water itself for diffusion and have performed comparisons and investigations on various water-flowing structures, for the sake of development of simple dispersion techniques. As a result, it has been revealed that it is effective to place two or more inclined flow channels which are inclined in predetermined directions in two or more stages. Namely, if inclined flow channels are placed in two or more stages, the dropping flows at the stepped portions among the respective stages, as well as the water flows in the respective inclined flow channels, effectively contribute to diffusion, which enables accurately determining the number of individual organism by photographing using a single camera in the flow channels and by analysis processing on captured images.

In addition thereto, it has been revealed that such diffusion by flowing water induces a large number of foams in the water, which obstructs the extraction of the number of individual organism by image analyses, but the stepped portions among the respective stages can erase foams, which is effective in eliminating the obstruction to the image analyses.

An individual-organism counting device of the present invention is developed based on the above-described findings, the individual-organism counting device, including: two or more inclined flow channels which are inclined in predetermined directions and placed in two or more stages; wherein the two or more inclined flow channels are structured, such that a liquid flowed out from a downstream end portion of an upper-stage inclined flow channel flows into an upstream end portion of a lower-stage inclined flow channel to form a continuous liquid flow channel and, also, to-be-counted individual organism which are introduced into the upper-stage inclined flow channel are transferred to the lower-stage inclined flow channel, through a fluid flowing through the liquid flow channel, the lower-stage inclined flow channel is provided with a measurement portion formed from a translucent bottom plate and, also, the measurement portion is combined with an illumination mechanism which directs light to the lower side of the measurement portion, a camera which photographs the measurement portion from thereabove, and an image analysis portion which determines the number of individual organism passing through the measurement portion along with the liquid, based on image data obtained from the camera.

In the individual-organism counting device according to the present invention, a liquid such as sea water or real water successively flows from an upper-stage inclined flow channel to a lower-stage inclined flow channel. If an aggregation of individual organism to be counted are introduced into the upper-stage inclined flow channel, they are transferred from the upper-stage inclined flow channel to the lower-stage inclined flow channel and, during this transferring process, the aggregation of individual organism are dispersed into the respective individual organism. Particularly, the diffusion is facilitated at the stepped portion at which the individual organism drop from the downstream portion of the upper-stage inclined flow channel to the lower-stage inclined flow channel. Concurrently, foams are erased at this stepped portion. The dispersed individual organism are photographed by the camera, when passing through the measurement portion in the lower-stage inclined flow channel, and the number of them is determined from the photograph data. The diffusion of the aggregation of individual organism is facilitated, which eliminates overlaps of individual organism with one another, thereby enabling accurately determining the number of individual organism, even by photographing them with the single camera at the measurement portion.

It is preferable that each of the inclined flow channels is provided at its intermediate portion with a stem-shaped liquid reservoir having a bottom surface which is inclined upwardly toward its downstream side with an inclination angle gradually increasing with increasing distance from the opposite sides to the center. By providing the liquid reservoirs downstream from the individual-organism introducing portion in the upper-stage inclined flow channel, and upstream from the measurement portion in the lower-stage inclined flow channel, it is possible to facilitate the diffusion of the individual organism, thereby further improving the accuracy of the counting in the measurement portion.

Further, the inclination angles of the inclined flow channels are selected in such a way as to ensure flow velocities necessary for transferring and diffusing individual organism and, it is preferable to make the inclination angle of the lower-stage flow channel larger than the inclination angle of the upper-stage flow channel, while satisfying the aforementioned condition. This accelerates the flow of the liquid, which facilitates the diffusion of the individual organism in the liquid in the direction of transfer thereof, thereby further improving the accuracy of the counting in the measurement portion.

Further, regarding the inclined flow channels, it is preferable to make the upper-stage flow channel shorter than the lower-stage flow channel and, also, to place the upper-stage flow channel above an upstream portion of the lower-stage flow channel, in order to open the measurement portion in the lower-stage inclined flow channel at its upper side and, also, it is preferable to place the camera thereat, in view of the equipment structure.

It is preferable that the illumination mechanism emits diffused light, particularly white diffused light. By employing such an illumination mechanism, it is possible to alleviate the influence of waves along with the flow of the liquid, thereby improving the accuracy of the counting in the measurement portion.

It is preferable that the camera is inclined in optical axis with respect to a line perpendicular to the bottom surface of the measurement portion which is provided halfway through the inclined flow channel. By installing the camera with inclined as described above, it is possible to alleviate the influence of waves along with the flow of the liquid, thereby improving the accuracy of the counting in the measurement portion. In view of the equipment structure, it is preferable that the camera is inclined in optical axis toward the downstream side of the inclined flow channel.

The number of the inclined flow channels can be three or more, but two stages can offer sufficient effects. With increasing number of stages, the device scale increases. Therefore, it is preferable to provide two or three stages. In the case of three stages, similarly, it is preferable to make the inclined flow channels in the first and second stages shorter than the inclined flow channel in the third stage and, also, to place the inclined flow channels in the first and second stages above an upstream portion of the inclined flow channel in the third stage, in order to open the measurement portion in the third-stage inclined flow channel at its upper side and, also, it is preferable to place a camera thereat.

The directions of the inclinations of the inclined flow channels placed in the two or more stages are not particularly limited, and can be all the same direction. In cases where they are alternately-reversed directions, the inclined flow channels are overlapped with one another in the upward and downward directions, which can reduce the plane space. In cases where they are the same direction, the inclined flow channels are continued in a single direction, thereby increasing the length.

Regarding the type of the used liquid, it goes without saying that sea water, real water and the like can be properly selected, according to the habitat environment of individual organism to be counted.

### EFFECT OF THE INVETION

The individual-organism counting device according to the present invention is adapted to flow a liquid, such as sea water or real water, through inclined flow channels placed in two or more stages and, also, is adapted to transfer to-be-counted individual organism using a liquid flow channel including a stepped portion, which can disperse the individual organism while preventing the individual organism from being debilitated or extinguished. Further, it is possible to alleviate the influence of the occurrence of foams which becomes a problem in diffusing the fluid. These enable accurately determining the number of individual organism by photographing them with a single camera in the measurement portion and also enable simplification and size reduction of the device along therewith.

### BRIEF DESCRIPTIONS OF THE DRAWINGS

[Fig. 1] Fig. 1 is a schematic structural view and a side view which illustrate the entire structure of an individual-organism counting device illustrating an embodiment of the present invention.
[Fig. 2] Fig. 2 is a perspective view of a liquid flow channel which is a main part of the same individual-organism counting device.
[Fig. 3] Fig. 3 is another perspective view of the same fluid channel.
[Fig. 4] Fig. 4 is a perspective view of an inclined flow channel in an upper stage which constitutes the same fluid channel.
[Fig. 5] Fig. 5 is a perspective view of an inclined flow channel in a lower stage which constitutes the same fluid channel.
[Fig. 6] Fig. 6 is a plan view schematically illustrating the individual-organism dispersing function of liquid reservoirs formed in the upper and lower inclined flow channels.
[Fig. 7] Fig. 7 is a structural view of an image analysis portion provided in the individual-organism counting device.
[Fig. 8] Fig. 8 is a flow chart illustrating the functions of the same image analysis portion.
[Fig. 9] Fig. 9 is an explanation view of the principle of counting by the same image analysis portion, illustrating binarization processing.
[Fig. 10] Fig. 10 is an explanation view of the principle of counting by the same image analysis portion, illustrating creation of a determination image to calculations/determinations.

### BEST MODE FOR CARRYINGOUT THE INVENTION

Hereinafter, an embodiment of the present invention will be described, with reference to the drawings.

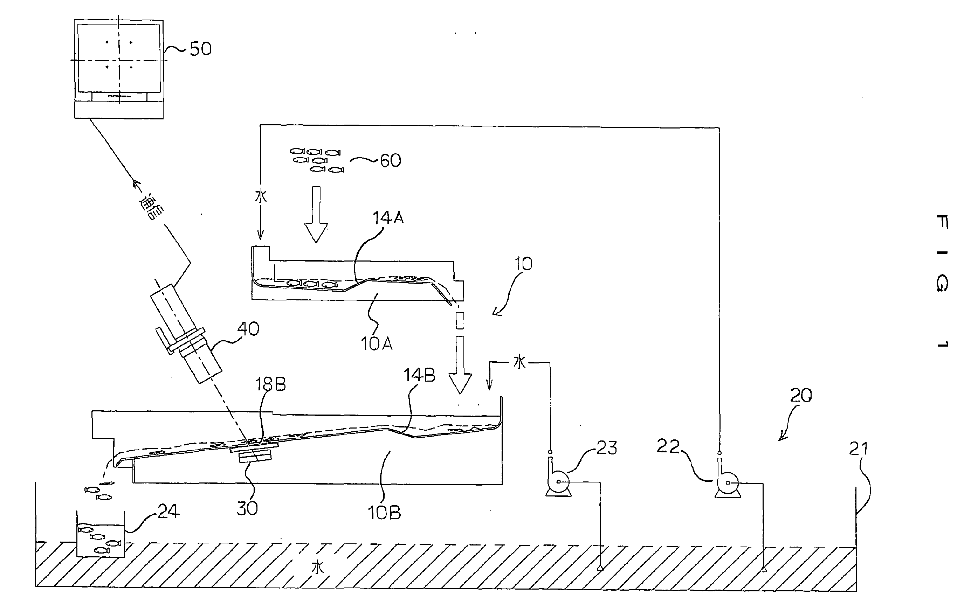

As illustrated in Fig. 1, an individual-organism counting device according to the present embodiment includes a liquid flow channel 10 constituted by inclined flow channels 10A and 10B stacked in two stages, a liquid circulation mechanism 20 which circulates sea water as a liquid through the liquid flow channel 10, and an illumination mechanism 30, a camera 40 and an image analysis portion 50 which are combined with the inclined flow channel 10B in order to continuously count individual organism in the liquid flow channel 10.

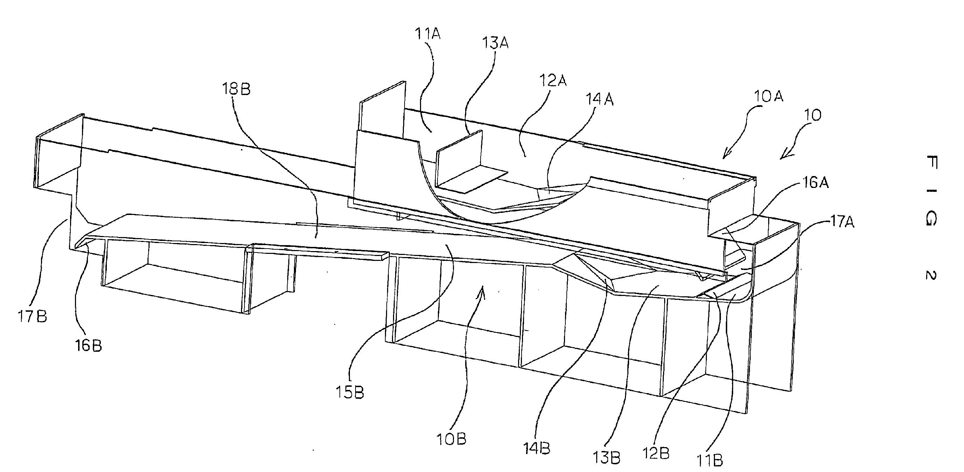

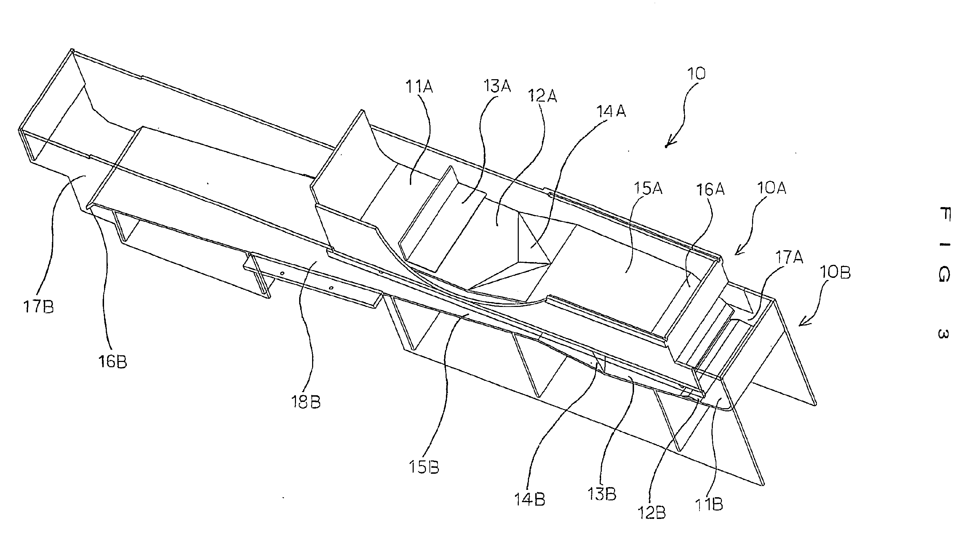

The upper and lower inclined flow channels 10A and 10B constituting the liquid flow channel 10 are both longitudinally-long angular boxes with U-shaped cross sections which are constituted by a combination of side plates at the opposite sides and a bottom plate provided to bridge between the side plates at the opposite sides, as illustrated in Fig. 2 and Fig. 3. The bottom surface of the inclined flow channel 10A in the upper stage is flat in the lateral-widthwise direction except a portion thereof in the longitudinal direction and is downwardly inclined in its entirety from the left side to the right side in the figure. The bottom surface of the inclined flow channel 10B in the lower stage is also flat in the lateral-widthwise direction except a portion thereof in the longitudinal direction and is downwardly inclined in its entirety from the right side to the left side in the figure, oppositely from the upper-stage inclined flow channel 10A.

Further, the upper-stage inclined flow channel 10A has a length substantially equal to the half that of the lower-stage inclined flow channel 10B and is placed above an upstream portion of the lower-stage inclined flow channel 10B. Further, the inclination angle of the bottom surface of the lower-stage inclined flow channel 10B is larger than the inclination angle of the bottom surface of the upper-stage inclined flow channel 10A. The materials which form the inclined flow channels 10A and 10B are both transparent resins.

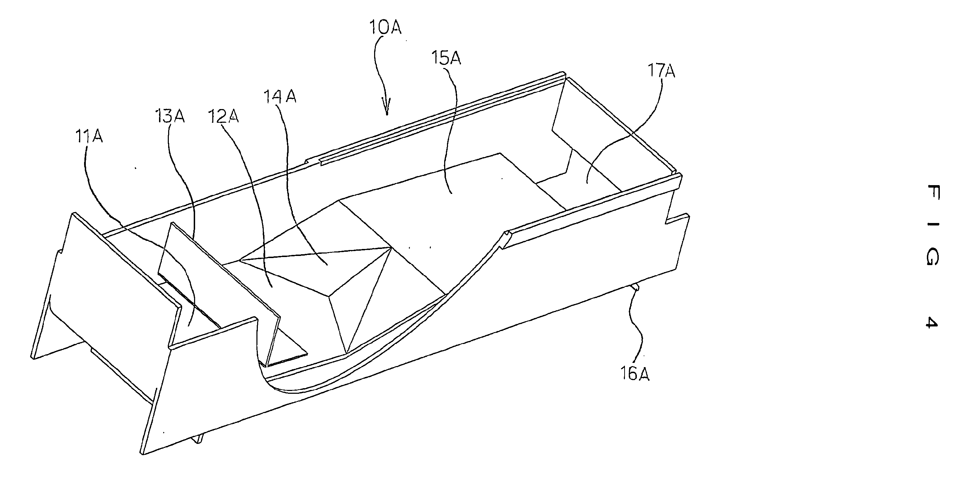

The upper-stage inclined flow channel 10A is illustrated in detail in Fig. 4, and its upstream end portion forms a liquid inlet portion 11A. Downstream from the liquid inlet portion 11A corresponds to an introducing portion 12A for individual organism 60 to be counted, and there is provided a partition wall 13 between the liquid inlet portion 11A and the individual-organism introducing portion 12A. The partition wall 13A is for concentrating the liquid supplied to the inlet portion 11A in the vicinity of the bottom surface of the inclined flow channel 10A and is provided over the entire width of the flow channel. The partition wall 13A has an L shape when viewed laterally and is placed such that its horizontal portion positioned at the lower side forms a predetermined gap between itself and the bottom surface of the inclined flow channel 10B, in order to attain the concentration.

At downstream from the individual-organism introducing portion 12A, there is provided a liquid reservoir 14A. The liquid reservoir 14A has a triangularly-recessed stem shape having a bottom surface which is inclined upwardly to its downstream side with an inclination angle gradually increasing with increasing distance from the opposite sides to the center. Downstream from the liquid reservoir 14A corresponds to a flat portion 15A having a bottom surface inclined downwardly at the same angle as that of the upstream side. At downstream from the flat portion 15A, there is provided a liquid outlet port 17A such that it is positioned at a downstream end portion of the inclined flow channel 10A, and such that an acceleration portion 16A inclined downwardly at a sharp angle is interposed therebetween.

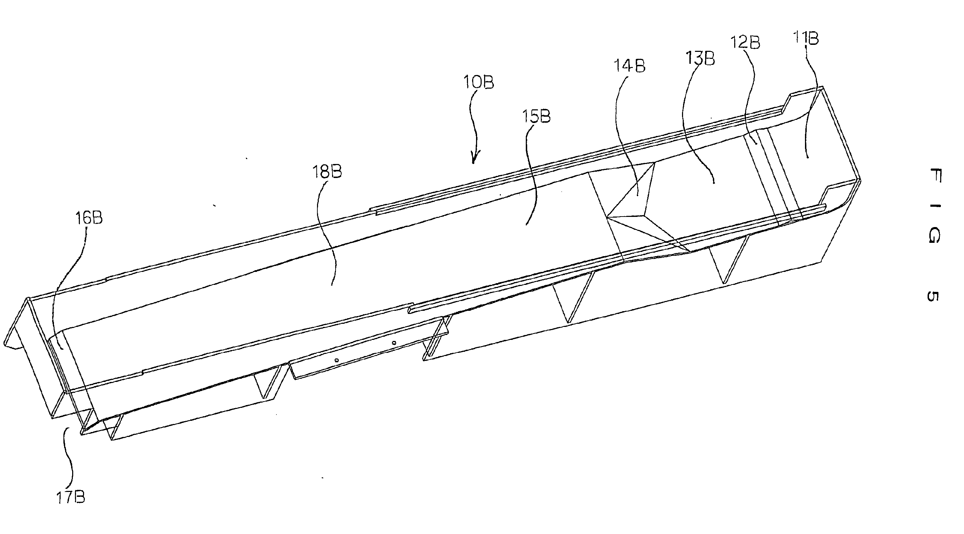

Under the downstream end portion of the upper-stage inclined flow channel 10A, there is positioned an upstream end portion of the lower-stage inclined flow channel 10B. The lower-stage inclined flow channel 10B is illustrated in detail in Fig. 5, and its upstream end portion forms a liquid inlet portion 11B. At downstream from the liquid inlet portion 11B, there is provided a lateral gate portion 12B having a bottom portion protruding in a triangular shape. At downstream from the gate portion 12B, there is provided a liquid reservoir 14B, such that a first flat portion 13B having a bottom surface inclined downwardly at a predetermined angle is interposed therebetween.

The liquid reservoir 14B has a triangularly-recessed stem shape having a bottom surface which is inclined upwardly to the downstream side with an inclination angle gradually increasing with increasing distance from the opposite sides to the center, similarly to the liquid reservoir 14A in the upper-stage inclined flow channel 10A. Downstream from the liquid reservoir 14B corresponds to a second flat portion 15B having a bottom surface inclined downwardly at the same angle as that of the upstream side. At downstream from the second flat portion 15B, there is provided a liquid outlet port 17B such that it is positioned at a downstream end portion of the inclined flow channel 10B, and such that an acceleration portion 16B inclined downwardly at a sharp angle is interposed therebetween. Further, there is a measurement portion 18B halfway through the flat portion 15B.

The upper-stage inclined flow channel 10A is shorter than the lower-stage inclined flow channel 10B and is placed above an upstream portion of the lower-stage flow channel 10B and, therefore, the measurement portion 18B is open at its upper side, and the camera 40 is placed thereat.

As illustrated in Fig. 1, the liquid circulation mechanism 20 which circulates sea water through the liquid flow channel 10 includes a tank 21 which stores sea water, a first pump 22 which pumps up the sea water in the tank 21 and supplies it to the liquid inlet portion 11A in the upper-stage inclined flow channel 10A, and a second pump 23 which pumps up the sea water in the tank 21 and supplies it to the liquid inlet portion 11B in the lower-stage inclined flow channel 10B. The tank 21 is structured to collect, through a individual-organism capture basket 24, the sea water which has been passed through the upper and lower inclined flow channels 10A and 10B and discharged from the liquid outlet port 17B of the inclined flow channel 10B.

Next, there will be described the illumination mechanism 30, the camera 40 and the image analysis portion 50 which are combined with the lower-stage inclined flow channel 10B in order to continuously count individual organism in the liquid flow channel 10.

The illumination mechanism 30 is provided under the measurement portion 18B in the lower-stage inclined flow channel 10B. The bottom plate of the inclined flow channel 10B including the measurement portion 18B is made of a transparent resin. The illumination mechanism 30 is constituted by a light source formed from a plurality of white light emitting diodes arranged in two directions which are the longitudinal and lateral directions along the back surface of the measurement portion 18B, and a diffusion plate placed near the front surface of the light source. The illumination mechanism 30 directs white diffused light to the back surface of the transparent bottom plate in the measurement portion 18B.

The camera 40, which is a line camera placed above the inclined flow channel 10B in order to photograph the measurement portion 18B from thereabove, photographs the measurement portion 18B along a predetermined lateral line at intervals of about 100 microseconds. Further, the optical axis of the camera 40 is inclined in the downstream direction with respect to a line perpendicular to the surface of the transparent bottom plate of the measurement portion 18B. This inclination is effective in alleviating the influence of waving of the sea water flowing through the measurement portion 18B, in combination with the illumination by the white diffused light from the back side of the illumination mechanism 30.

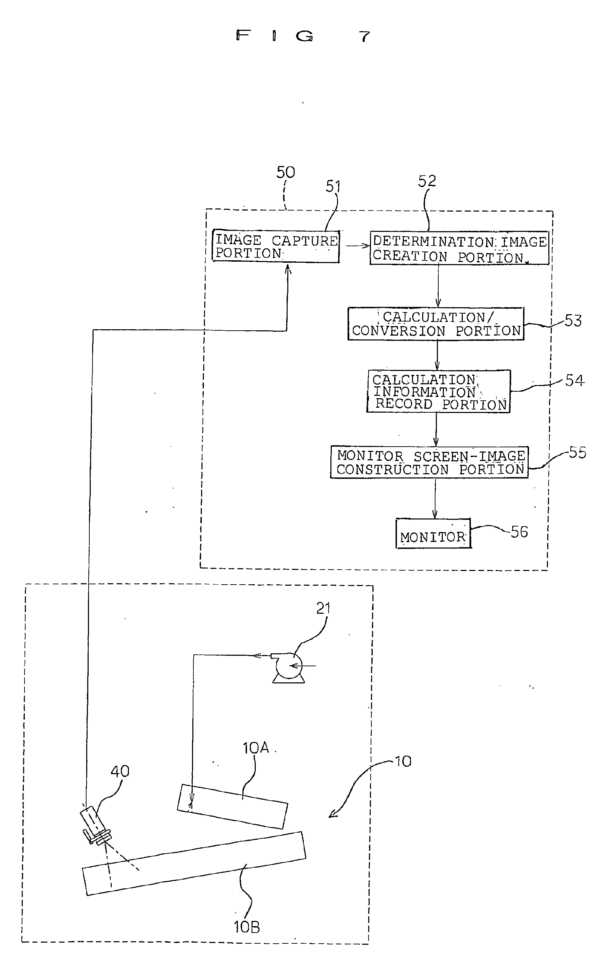

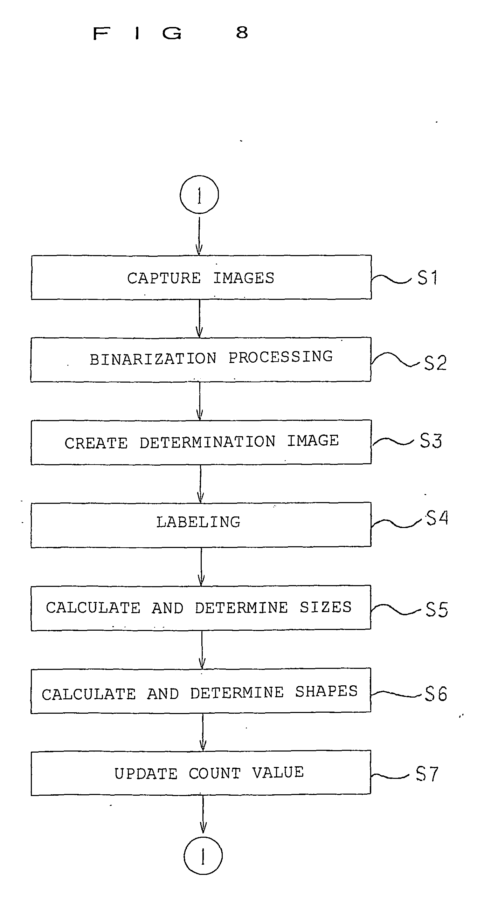

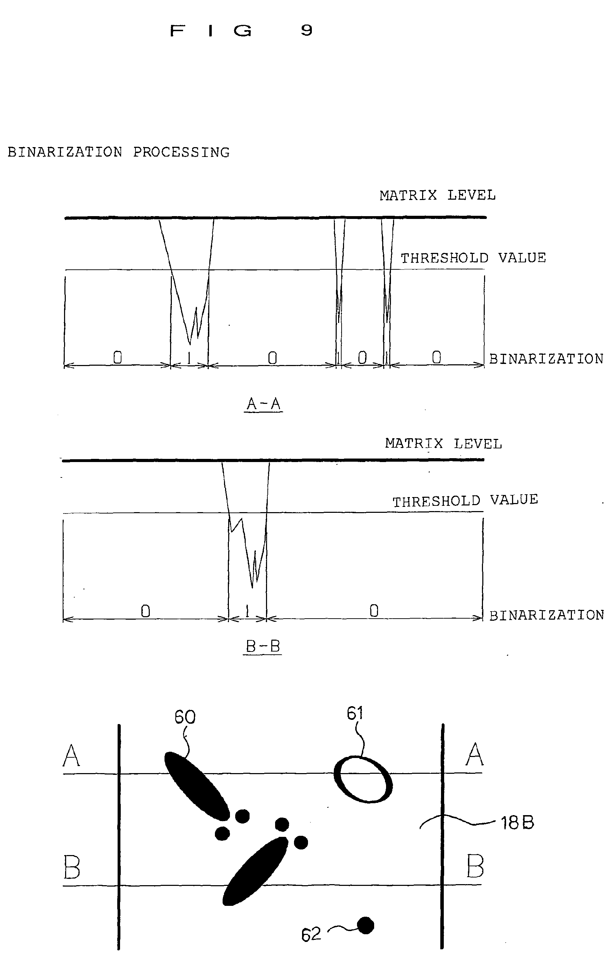

As illustrated in Fig. 7, the image analysis portion 50 includes an image capture portion 51 which captures line-shaped images from the camera 40, an image creation portion 52 which creates determination images (see Fig. 9) from the captured line-shaped images, a calculation/conversion portion 53 which counts the number of individual organism from the created determination images, a record portion 54 which records information about the calculation, a monitor screen-image construction portion 55, and a monitor 56 which displays the constructed images, and the like. Their functions will be described, with reference to Figs. 8 to 10.

At first, in step S1 in Fig. 8, the image analysis portion 50 successively captures line-shaped images from the camera 40. In step S2, the captured line-shaped images are successively subjected to binarization processing. As illustrated in Fig. 9, the binarization processing determines whether the line-shaped images are bright or dark based on a threshold value, in such a way as to determine portions with higher brightness than the threshold value to have a white color (a level 0) and to determine portions with higher darkness than the threshold value to have a black color (level 1). Fig. 9 schematically illustrates photograph data resulted from photographing along a line A-A and a line B-B on the measurement portion 18B using the camera 40, and the binarization processing on the photograph data. "60" in the measurement portion 18B designates an individual organism to be counted, "61" designates a foam which is a foreign substance, and "62" designates a solid substance such as a dust. The photograph data has a level of 1 (the black color) at the portions where these objects exist.

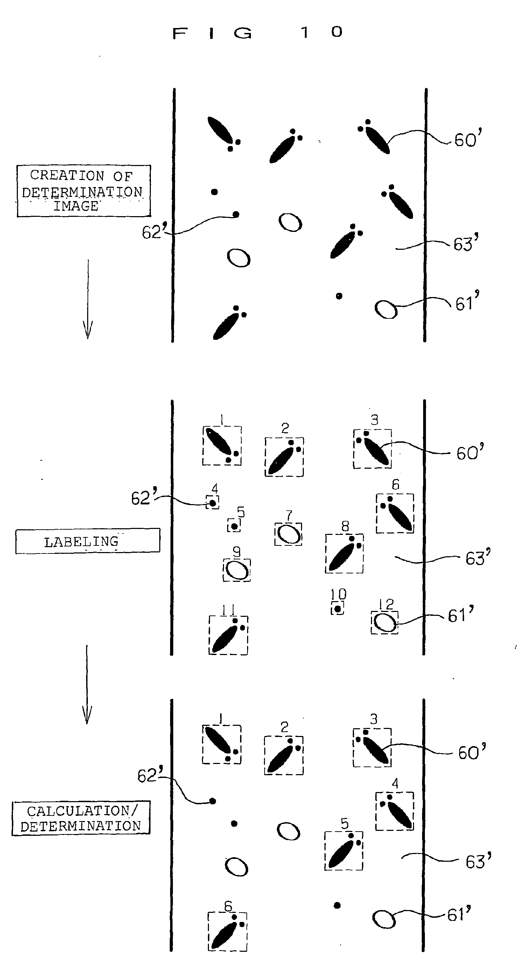

After the completion of the binarization processing on the line-shaped images, the line-shaped images are successively coupled to one another to create a determination image, in step S3. The determination image is illustrated in an upper stage in Fig. 10. In the determination image, there are shown images 60' of individual organism 60 to be counted, images 61' of foams 61, and images 62' of solid substances 62, and the like, among a matrix image 63'.

After the determination image is created, in step S4, all the images 60', 61' and 62' in the determination image are extracted and then are associated with numbers. This processing is called labeling, which is schematically illustrated in a middle stage in Fig. 10. After the completion of the labeling, in step S5, the sizes of the labeled images 60', 61' and 62' are determined and, subsequently, in step S6, the shapes of the images 60' , 61' and 62' are determined and, thus, only the images 60' of the to-be-counted individual organism 60 are extracted (a view in a lower stage in Fig. 10). Then, in step S7, the extracted images 60' of the individual organism 60 are counted, and the count value is updated.

By continuously performing this, the number of introduced individual organism 60 is automatically determined.

There will be described, in detail, the functions of the individual-organism counting device having the aforementioned structure, in cases where the number of individual small alevins, such as shrimp larvae, is determined therein.

In a counting operation, at first, the first pump 22 in the liquid circulation mechanism 20 is activated. Thus, sea water in the tank 21 is continuously supplied to the liquid inlet portion 11A provided at the upstream end portion of the upper-stage inclined flow channel 10A. The sea water supplied to the liquid inlet portion 11A flows through the inclined flow channel 10A from its upstream side to its downstream side and, then, is discharged therefrom through the liquid outlet port 17A provided at the downstream end portion. The sea water discharged through the outlet port 17A flows into the liquid inlet port 11B provided at the upstream end portion of the lower-stage inclined flow channel 10B, then flows through the inclined flow channel 10B from its upstream side to its downstream side and, then, is discharged therefrom into the tank 21 through the liquid outlet port 17B provided at the downstream end portion.

Thus, sea water is continuously circulated through the liquid flow channel 10 constituted by the upper and lower inclined flow channels 10A and 10B.

In order to determine the number of small alevins, such as shrimp larvae, an aggregation of individual organism 60 which is constituted by small alevins is introduced to the individual-organism introducing portion 12A in the upper-stage inclined flow channel 10A, at a state where sea water is circulated through the liquid flow channel 10. The introduced individual organism 60 are transferred through the inclined flow channel 10A from its upstream side to its downstream side, by the sea water flowing through the liquid flow channel 10.

At this time, the sea water supplied to the supply portion 11A is rectified into a high-velocity thin-layer flow along the bottom surface of the inclined flow channel 10A, by the partition wall 13A provided in the upstream side of the individual-organism introducing portion 12A. This ensures that the introduced individual organism 60 are transferred to the liquid reservoir 14A in the downstream side.

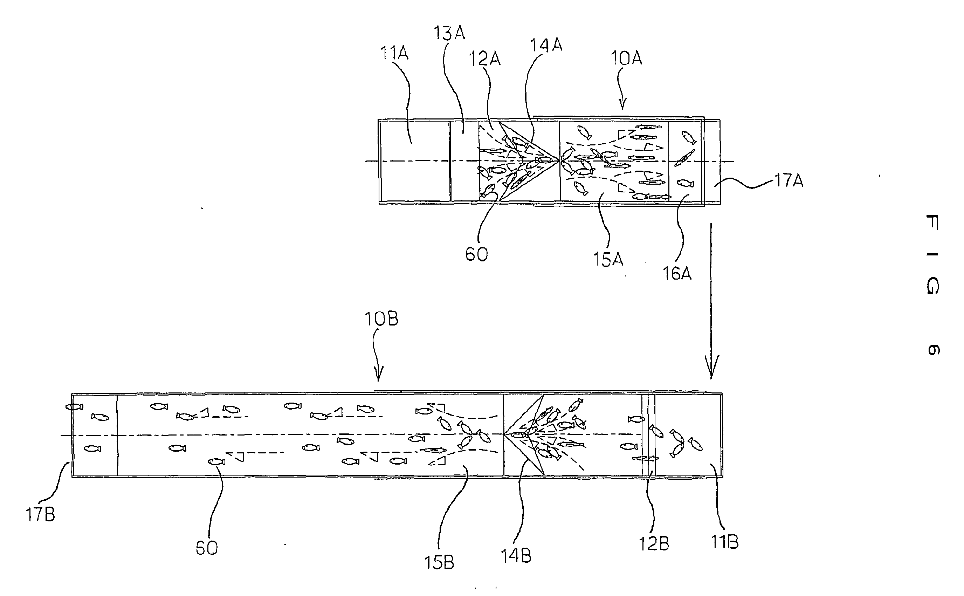

As illustrated in Fig. 6, the liquid reservoir 14A is provided, in its inclined surface raising toward the downstream side, with a triangular stem-shaped recess having an inclination angle gradually increasing with increasing distance from the opposite sides to the center. The sea water flow is temporarily concentrated on the recess and, therefore, is spread toward the opposite sides and upwardly and downwardly downstream therefrom. Accordingly, the introduced individual organism 60 are temporarily concentrated on the triangular-shaped recess when passing through the liquid reservoir 14A, but, after exiting therefrom, they are scattered toward the opposite sides and upwardly and downwardly and, then, are transferred to the downstream side. Then, the individual organism 60 pass through the steep acceleration portion 16A provided at the downstream end portion of the inclined flow channel 10A and, then, are discharged through the liquid outlet portion 17A. The discharged sea water drops and flows into the liquid inlet portion 11B provided at the upstream end portion of the lower-stage inclined flow channel 10B. During the process for dropping them from the acceleration portion 16A, the diffusion of the individual organism 60 within the sea water is facilitated.

The individual organism 60 flowed into the lower-stage inclined flow channel 10B together with the sea water are further diffused when overpassing the gate portion 12B. Subsequently, the individual organism are further diffused at the stem-shaped liquid reservoir 14B provided downstream therefrom, similarly to in the upper-stage inclined flow channel 10A. In addition thereto, the lower-stage inclined flow channel 10B has a larger inclination angle than that of the upper-stage inclined flow channel 10A. Accordingly, the sea-water flow is accelerated in the lower-stage inclined flow channel 10B, and the diffusion of the individual organism 60 proceeds mainly in the direction of transfer, in the second flat portion 15B and the like.

For this reasons, even though the individual organism 60 have been introduced as an aggregation, they have been sufficiently diffused when passing through the measurement portion 18B in the second flat portion 15B, which prevents laminar flows from overlapping in the lateral direction, the longitudinal direction and the thickwise direction. Accordingly, the number of individual organism 60 can be determined with high accuracy, by the single camera 40 and the image analysis portion 50 connected thereto.

In addition thereto, with the individual-organism counting device according to the present embodiment, the measurement portion 18B is illuminated from thereunder by the illumination mechanism 30. In order to diffuse the individual organism 60, it is necessary that the sea water passing through the liquid flow channel 10 has an amount of water equal to or more than a certain amount and, also, contains turbulent flows, while such an amount of water equal to or more than the certain amount and turbulent flows induce flow patterns of the sea water with the illumination of the measurement portion 18B, and the shadows of the patterns are photographed to be imaged by the camera 40. The shadows degrade the accuracy of the counting of individual organism 60 by the camera 40 in the measurement portion 18B. However, due to the perpendicular illumination of white diffused light by the illumination mechanism 30 and the inclination of the optical axis of the camera 40 with respect to the surface of the bottom plate of the measurement portion 18B, the shadows of the flow patterns are erased from the captured images, thereby improving the accuracy of the counting of individual organism 60 by the camera 40 and the image analysis portion 50 in the measurement portion 18B.

Further, foaming is suppressed, during the process for passing the individual organism 60 through the partition wall 13A in the upper-stage inclined flow channel 10A, during the process for dropping them from the acceleration portion 16A and the process for passing them through the gate portion 12B in the lower-stage inclined flow channel 10B. This can further increase the accuracy of the counting of individual organism 60 by the camera 40 and the image analysis portion 50 in the measurement portion 18B.

Furthermore, during the time since the introduction of the individual organism 60 into the individual-organism counting device until discharging of them, the individual organism 60 are immersed in the sea water and, therefore, are prevented from being debilitated or extinguished, even when they are shrimp larvae. The individual organism 60 which have been counted are collected by the capture basket 24 within the tank 21.

If the second pump 23 in the liquid circulation mechanism 20 is activated together with the first pump 22, the sea water is also supplied to the lower-stage inclined flow channel 10B, which increases the amount of water in the inclined flow channel 10B, thereby further facilitating the diffusion of the individual organism 60.

The aforementioned individual-organism counting device was actually fabricated. The upper-stage inclined flow channel 10A was formed to have a length of about 400 mm and an inclination angle of about 3 degrees, while the lower-stage inclined flow channel 10B was formed to have a length of about 800 mm and an inclination angle of about 7 degrees. Further, both the inclined flow channels 10A and 10B were formed to have a lateral width of about 100 mm, and the liquid reservoirs 14A and 14B in both the inclined flow channels 10A and 10B were formed to have a minimum inclination angle of 18 degrees and a maximum inclination angle of about 30 degrees. In the liquid circulation mechanism 20, only the second pump 22 was activated, and an artificial sea water was circulated through the inclined flow channels 10A and 10B at a flow rate of 10 L/min. When shrimp larvae with lengths of about 5 mm ware collectively introduced, about 100 shrimp larvae at a time, the error fell within -5 shrimp larvae per 100 shrimp larvae. When about 500 shrimp larvae were introduced at a time, the error fell within -5 %. When about 1000 shrimp larvae were introduced at a time, the error fell within -10 %.

While, in the embodiment, light emitting diodes are employed as the light source in the illumination mechanism 30, it is also possible to employ other light sources. While a line camera is employed as the camera 40, it is also possible to employ a CCD camera and the like, even though such a CCD camera involves slightly-different image analysis processing. An optimum value of the inclination angle of the camera 40 for eliminating the influence of waves can be determined by viewing images, and can be properly changed according to the device structure, the conditions of liquid flows, and the like.

### EXPLANATION OF REFERENCE NUMERALS

- 10:: Liquid flow channel
- 10A:: Upper-stage inclined flow channel
- 11A:: Liquid inlet portion
- 12A:: Individual-organism introducing portion
- 13A:: Partition wall
- 14A:: Liquid reservoir
- 15A:: Flat portion
- 16A:: Acceleration portion
- 17A:: Outlet portion
- 10B:: Lower-stage inclined flow channel
- 11B:: Liquid inlet portion
- 12B:: Gate portion
- 13B:: First flat portion
- 14B:: Liquid reservoir
- 15B:: Second flat portion
- 16B:: Acceleration portion
- 17B:: Acceleration portion
- 18B:: Measurement portion
- 20:: Liquid circulation mechanism
- 21:: Tank
- 22:: First pump
- 23:: Second pump
- 24:: Capture basket
- 30:: Illumination mechanism
- 40:: Camera
- 50:: Image analysis portion
- 60:: Individual organism (alevins) to be counted
- 60':: Images of individual organism

## Claims

1. An individual-organism counting device which utilize a fluid, comprising:
two or more inclined flow channels which are inclined in predetermined directions and placed in two or more stages;
wherein the two or more inclined flow channels are structured, such that a liquid flowed out from a downstream end portion of an upper-stage inclined flow channel flows into an upstream end portion of a lower-stage inclined flow channel to form a continuous liquid flow channel and, also, to-be-counted individual organism which are introduced into the upper-stage inclined flow channel are transferred to the lower-stage inclined flow channel, through a fluid flowing through the liquid flow channel,
the lower-stage inclined flow channel is provided with a measurement portion formed from a translucent bottom plate and, also, the measurement portion is combined with an illumination mechanism which directs light to the lower side of the measurement portion, a camera which photographs the measurement portion from thereabove, and an image analysis portion which determines the number of individual organism passing through the measurement portion along with the liquid, based on image data obtained from the camera.

2. The individual-organism counting device according to Claim 1, wherein
at least one of the two or more inclined flow channels is provided with a stem-shaped liquid reservoir having a bottom surface which is inclined upwardly toward its downstream side with an inclination angle gradually increasing with increasing distance from the opposite sides to the center.

3. The individual-organism counting device according to Claim 2, wherein
the liquid reservoirs are provided downstream from an individual-organism introducing portion in the upper-stage inclined flow channel and upstream from the measurement portion in the lower-stage inclined flow channel.

4. The individual-organism counting device according to any one of Claims 1 to 3, wherein
the upper-stage inclined flow channel has an inclination angle larger than the inclination angle of the lower-stage inclined flow channel.

5. The individual-organism counting device according to any one of Claims 1 to 4, wherein
the inclined flow channels in the respective stages are inclined in alternately-reversed directions.

6. The individual-organism counting device according to Claim 5, wherein
the inclined flow channels other than the inclined flow channel in the lowermost stage are shorter than the inclined flow channel in the lowermost stage and, also, are placed above an upstream portion of the inclined flow channel in the lowermost stage, and a camera is placed above a downstream portion of the inclined flow channel in the lowermost stage.

7. The individual-organism counting device according to any one of Claims 1 to 6, wherein
the illumination mechanism directs diffused light to the back surface of the measurement portion.

8. The individual-organism counting device according to any one of Claims 1 to 7, wherein
the camera is inclined in optical axis with respect to a line perpendicular to the bottom surface of the measurement portion.
